(19) 

Europäisches Patentamt
European Patent Office
Office européen des brevets

(11) **EP 2 190 183 A1**

(12) **EUROPEAN PATENT APPLICATION**
published in accordance with Art. 153(4) EPC

(43) Date of publication:
   **26.05.2010 Bulletin 2010/21**

(51) Int Cl.:
   ***H04N 5/21*** *(2006.01)*

(21) Application number: **08711734.7**

(22) Date of filing: **21.02.2008**

(86) International application number:
   **PCT/JP2008/052945**

(87) International publication number:
   **WO 2009/034727 (19.03.2009 Gazette 2009/12)**

(84) Designated Contracting States:
   **AT BE BG CH CY CZ DE DK EE ES FI FR GB GR HR HU IE IS IT LI LT LU LV MC MT NL NO PL PT RO SE SI SK TR**
   Designated Extension States:
   **AL BA MK RS**

(30) Priority: **11.09.2007 JP 2007235329**

(71) Applicant: **Mitsubishi Electric Corporation Chiyoda-ku Tokyo 100-8310 (JP)**

(72) Inventors:
   • **ONO, Yoshiki**
     **Tokyo 100-8310 (JP)**
   • **SUGIYAMA, Kazuhiro**
     **Tokyo 100-8310 (JP)**
   • **HATANO, Yoshiko**
     **Tokyo 100-8310 (JP)**
   • **SUKENO, Junji**
     **Tokyo 100-8310 (JP)**

(74) Representative: **HOFFMANN EITLE Patent- und Rechtsanwälte Arabellastrasse 4 D-81925 München (DE)**

(54) **NOISE REDUCTION DEVICE**

(57)    Problem: The present invention is made for enhancing image qualities of imaging information devices, and is to provide a noise reduction device that utilizes an ε filter for reducing noise included in an image, and that is capable of curbing blurring of a luminance profile shape in an edge area of the image. Solution: The noise reduction device herein provided includes an extraction means for extracting a pixel block in an input image including a given pixel and a plurality of its neighboring pixels; second-order differential value calculation means (101 through 104) for obtaining second-order differential values of pixel data values with respect to a plurality of directions; a multi-directional second-order differential value calculation means (105) for calculating a multi-directional second-order differential value based on the second-order differential values; a threshold-value setting means (106) for determining a smoothing threshold-value ε based on the multi-directional second-order differential value; and a smoothing means (107) for performing smoothing on a pixel having a pixel data value at which its difference to that of the given pixel becomes, in absolute value, equal to or smaller than the smoothing threshold-value ε.

**Fig. 2**

EP 2 190 183 A1

**Description**

TECHNICAL FIELD

The present invention relates to noise reduction devices that reduce noise included in a digitized image, in particular to a noise reduction device that performs a filtering process on the image inputted thereinto.

BACKGROUND ART

In order to enhance image qualities of imaging and information devices such as a mobile telephone terminal and a digital camera for performing recording and/or playback of images, a process to reduce noise in a digitized image is generally taking place. In a noise reduction device that performs the process to reduce the noise, a noise reduction process using a so-called epsilon ($\varepsilon$) filter is commonly performed in which in particular, among a given pixel and its neighboring pixels of an input image, a smoothing process is applied only to a pixel whose tone level difference of luminance to the given pixel is equal to or smaller than a smoothing threshold-value $\varepsilon$.

By the way, noise in the digitized image occurs frequently at an edge of the image or in proximity to the edge thereof. There exists a feature that such noise becomes significant in an area whose gray-scale change in luminance is large, such as an edge area.

To this end, in a conventional noise reduction device, it has been taking place that pixels in an area whose gray-scale change in luminance is large, such as an edge area are detected for an input image, and, to the pixels in the area whose gray-scale change is large, is applied a larger smoothing threshold-value $\varepsilon$ of an $\varepsilon$ filter than the value for those in a texture portion whose gray-scale change is small. To be specific, based on a maximum absolute value of four directional first-order differential values (first difference values) of luminance with respect to each given pixel in a pixel block including a plurality of pixels, it is determined whether or not the given pixel is included in an edge area, and when the given pixel is not included in the edge area, a smaller value of the threshold-value $\varepsilon$ is applied than the value to be applied when the given pixel is included in the edge area (for example, refer to Patent Document 1).

In addition, in another conventional noise reduction device, a mean value is calculated for an input image from luminance values of pixels in a pixel block including a plurality of pixels, its first differences with respect to each of the pixels in the pixel block are converted into its absolute values and then summed up together so as to be compared with a preset edge determination threshold-value, thereby making determination on whether or not an edge is included in the pixel block. And then, it has been so arranged that a noise reduction process using an $\varepsilon$ filter is performed when the edge is included, but the noise reduction process using the filter is *not* performed when the edge is not included (for example, refer to Patent Document 2)_

[Patent Document 1]

Japanese Laid-Open Patent Publication No. 2001-188272 (Paragraphs 0063, 0064, Fig. 1)

[Patent Document 2]

Japanese Laid-Open Patent Publication No. 2004-282442 (Pages 5 to 6, Fig. 1)

DISCLOSURE OF THE INVENTION

[Problems to be Solved by the Invention]

However, when a noise reduction process using an $\varepsilon$ filter is performed on the entirety of an edge area of an input image, there arises a problem in that, a luminance profile shape is significantly blurred in the vicinity of a rising-edge start-point and in the vicinity of a rising-edge end-point. And then, in either the conventional noise reduction device or the another conventional noise reduction device described above, because the device is configured to perform first-order differentiation or first difference calculation with respect to luminance of pixels each in a pixel block including a plurality of pixels of the input image, and to perform a determination of an edge area based on an absolute value of first-order differential values or first differences, the edge area to which a smoothing process is applied using the $\varepsilon$ filter is the entirety of edge area that includes both of the vicinity of the rising-edge start-point and the vicinity of the rising-edge end-point, so that there arises such an unavoidable problem that the luminance profile shape is significantly blurred in the vicinity of the rising-edge start-point and in the vicinity of the rising-edge end-point.

The present invention has been directed at solving those problems described above, and an object of the invention is to provide a noise reduction device that is capable of curbing the blurring of a luminance profile shape in an edge area of an image.

[Means for Solving the Problems]

A noise reduction device according to the present invention comprises an extraction means for extracting a pixel block in an input image, the pixel block including a given pixel and a plurality of pixels neighboring and centering on the given pixel; a second-order differential value calculation means for obtaining respective second-order differential values of pixel data values for the pixels constituting the pixel block, with respect to a plurality of directions each intersecting at and centering on the given pixel; a threshold-value setting means for determining a smoothing threshold-value $\varepsilon$ corresponding to the pixel block, based on the respective second-order differential values; and a smoothing means for performing smoothing, among the pixels constituting the pixel block, on a pixel having a pixel data value at which its difference to a pixel data value of the given pixel becomes, in absolute value, equal to or smaller than the smoothing threshold-value $\varepsilon$.

In addition, another noise reduction device according to the present invention comprises an extraction means for extracting a first pixel block in an input image, the pixel block including a given pixel and a plurality of pixels neighboring and centering on the given pixel corresponding to a first frame among a plurality of frames; a second-order differential value calculation means for obtaining respective second-order differential values of pixel data values for the pixels constituting the first pixel block, with respect to a plurality of directions each intersecting at and centering on the given pixel; a threshold-value setting means for determining a smoothing threshold-value $\varepsilon$, based on the respective second-order differential values; and a smoothing means for performing smoothing, among the pixels constituting the first pixel block, on a pixel having a pixel data value at which its difference to a pixel data value of the given pixel becomes, in absolute value, equal to or smaller than the smoothing threshold-value $\varepsilon$, and also for performing smoothing, among pixels constituting a second pixel block in a second frame different from the first frame among the plurality of frames, on a pixel having a pixel data value at which its difference to the pixel data value of the given pixel becomes, in absolute value, equal to or smaller than the smoothing threshold-value $\varepsilon$.

[Effects of the Invention]

According to the noise reduction device in the present invention, a pixel block centering on a given pixel in an input image is extracted; respective second-order differential values of pixel data values for the pixels constituting the pixel block are obtained with respect to a plurality of directions each intersecting at and centering on the given pixel; the vicinity of a rising start-point and the vicinity of a rising end-point of an edge in the input image are detected; and a smoothing threshold-value $\varepsilon$ corresponding to the pixel block is determined based on the respective second-order differential values obtained for the respective plurality of directions, so that it is possible to curb edge blurring in luminance profile shape occurring in the vicinity of the rising start-point of the detected edge and in the vicinity of the rising end-point thereof.

In addition, according to the another noise reduction device in the present invention, an input image corresponding to a first frame among a plurality of frames is subjected to smoothing with a smoothing threshold-value $\varepsilon$ applied to the input image corresponding to the first frame, and an input image corresponding to a second frame different from the first frame among the plurality of frames is also subjected to smoothing with the smoothing threshold-value $\varepsilon$, so that there exist effects that edge blurring in luminance profile shape can be curbed, and at the same time, noise reduction performance is enhanced.

BRIEF DESCRIPTION OF DRAWINGS

Fig. 1 shows specific examples of a nonlinear function $f(X)$ for an $\varepsilon$ filter;
Fig. 2 is a structure diagram showing a configuration of a noise reduction device in Embodiment 1 according to the present invention;
Fig. 3 is an illustrative diagram for explaining a direction "A," a direction "B," a direction "C," and a direction "D" with respect to a given pixel positioned at the center in a pixel block of three-by-three pixels;
Fig. 4 is an illustrative diagram for explaining, by using a waveform change of pixel data values, exemplified tone levels near an edge in the case where the difference between a smoothing threshold-value $\varepsilon$ and a gray-scale change is small;
Fig. 5 is an illustrative diagram for explaining, by using a waveform change of pixel data values, exemplified tone levels near an edge in the case where the difference between a smoothing threshold-value $\varepsilon$ and a gray-scale change is large;

Fig. 6 is an illustrative diagram for explaining changes in waveform near an edge until absolute values of second-order differential values are calculated;

Fig. 7 is an illustrative diagram for explaining, by using a waveform change of pixel data values, exemplified tone levels near an edge in the noise reduction device in Embodiment 1 in the case where the difference between a smoothing threshold-value ε and a gray-scale change is small;

Fig. 8 is an illustrative diagram for explaining, by using a waveform change of pixel data values, exemplified tone levels near an edge in the noise reduction device in Embodiment 1 in the case where the difference between a smoothing threshold-value ε and a gray-scale change is large;

Fig. 9 is a structure diagram showing a configuration of another noise reduction device in Embodiment 2 according to the present invention; and

Fig. 10 is a diagram showing pixel positions neighboring a given pixel in a case of Embodiment 2.

[Explanation of Numerals and Symbols]

"101" designates a direction-A second-order differential value calculation means; "102," direction-B second-order differential value calculation means; "103," direction-C second-order differential value calculation means; "104," direction-D second-order differential value calculation means; "105," multi-directional second-order differential value calculation means; "106," smoothing threshold-value ε setting means; "107," ε filter; and "207," ε filter.

BEST MODE FOR CARRYING OUT THE INVENTION

Hereinafter, the explanation will be made for a noise reduction device in an embodiment according to the present invention in which a pixel block in an input image including a given pixel and a plurality of pixels neighboring and centering on the given pixel is constituted of three-by-three pixels, for example.

Embodiment 1.

While it is well known in itself that an epsilon (ε) filter is used for smoothing in a noise reduction process of an image, the followings are for explaining, at first, an ε filter used in the present invention.

The following Equation (1) and Equation (2) are arithmetic equations expressing characteristics of the ε filter.

$$y(i,j) = x(i,j) + \frac{\sum_{k=-N}^{N}\sum_{l=-N}^{N} a(k,l)\cdot f(x(i+k,j+l)-x(i,j))}{\sum_{k=-N}^{N}\sum_{l=-N}^{N} a(k,l)} \quad \cdots \text{Equation(1)}$$

$$\begin{cases} f(X)=X & \cdots & |X|\leq\varepsilon \\ |f(X)|\leq\varepsilon & \cdots & |X|>\varepsilon \end{cases} \quad \cdots \text{Equation(2)}$$

Here, the parameter "X" is given by the following Equation (3).

$$X = x(i + k, j + l) - x(i, j) \quad \cdots \text{Equation(3)}$$

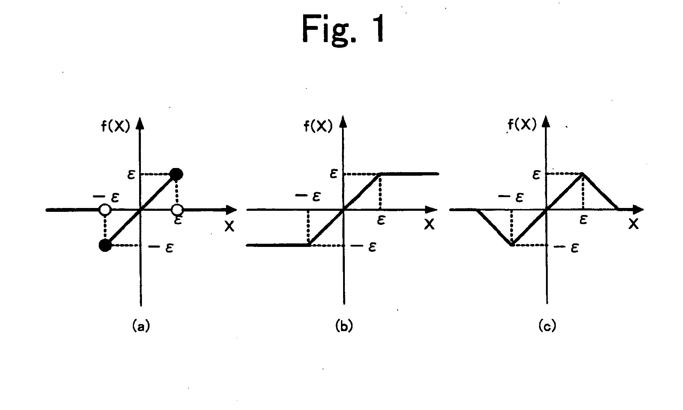

Specific examples of a nonlinear function $f(X)$ that satisfies Equation (2) are shown in Fig. 1. Fig. 1(a) is a first example of the nonlinear function $f(X)$ in which the function is discontinuous at $X = \pm\varepsilon$. In a case in which an $\varepsilon$ filter with this nonlinear function $f(X)$ is used for a smoothing process, smoothing by the $\varepsilon$ filter is performed on an input signal $X$ when an absolute value of the input signal $X$ is equal to or smaller than "$\varepsilon$"; however, the smoothing is not performed when an absolute value of the input signal $X$ is larger than "$\varepsilon$." Therefore, for example, a portion whose gray-scale change is as large as by an edge in the image, is preserved without subjected to smoothing, whereas a portion whose gray-scale change is small in the image is subjected to smoothing, so that its noise can be reduced by a filtering process by the $\varepsilon$ filter.

Fig. 1(b) is a second example of the nonlinear function $f(X)$ and Fig. 1(b) is a third example of the nonlinear function $f(X)$ In any one of them, the function is continuous at $X = \pm\varepsilon$. In a case in which an $\varepsilon$ filter with these nonlinear functions $f(X)$ is used for a smoothing process, smoothing by the $\varepsilon$ filter is performed on an input signal $X$ when an absolute value of the input signal $X$ is equal to or smaller than "$\varepsilon$"; however, the degree of the smoothing is restricted when an absolute value of the input signal $X$ is larger than "$\varepsilon$" Because these nonlinear functions $f(X)$ are continuous functions each, there exists an effect that a signal distortion due to the presence and absence of smoothing is not likely to occur after the filtering process, in comparison with the case with the nonlinear function $f(X)$ in Fig. 1(a).

Next, the explanation is made as follows for the noise reduction device in Embodiment 1 according to the present invention, which uses the $\varepsilon$ filter described above.

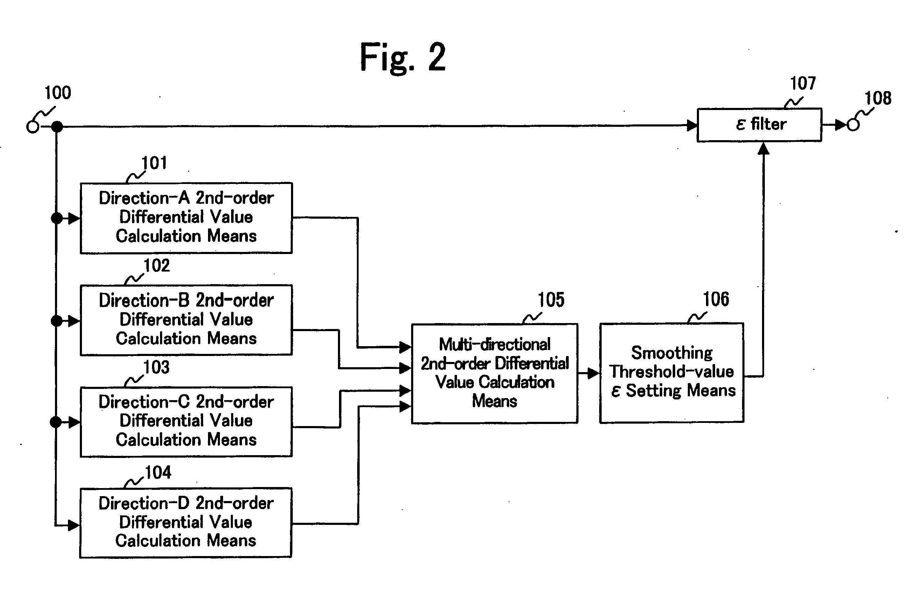

Fig. 2 is a structure diagram showing a configuration of the noise reduction device in Embodiment 1 according to the present invention. For an input image inputted into an image input terminal 100, a noise reduction process is performed on a pixel-block basis. The input image is inputted into a direction-A second-order differential value calculation means 101 that calculates a second-order differential value in a direction "A" for a given pixel that is positioned at the center in the pixel block, into a direction-B second-order differential value calculation means 102 that calculates a second-order differential value in a direction "B" for the given pixel, into a direction-C second-order differential value calculation means 103 that calculates a second-order differential value in a direction "C" for the given pixel, and into a direction-D second-order differential value calculation means 104 that calculates a second-order differential value in a direction "D" for the given pixel.

Each of the total four directional second-order differential values calculated in the direction "A," direction "B," direction "C," and direction "D" is inputted into a multi-directional second-order differential value calculation means 105, and a multi-directional second-order differential value for the given pixel is calculated so as to be outputted into a smoothing threshold-value $\varepsilon$ setting means 106. In the smoothing threshold-value $\varepsilon$ setting means 106, a smoothing threshold-value $\varepsilon$- is determined based on the inputted multi-directional second-order differential value for the given pixel, and the smoothing threshold-value $\varepsilon$ is outputted into an $\varepsilon$ filter 107.

In the $\varepsilon$ filter 107, a filtering process is performed on a pixel block of the input image inputted into the input terminal 100 using the smoothing threshold-value $\varepsilon$ having been outputted from the smoothing threshold-value $\varepsilon$ setting means 106. Note that, the given pixel is to be sequentially selected from and for all of the pixels of the input image, so that the pixel block centering on the given pixel is extracted from the input image for each of the pixels of the input image. Namely, the input image is, subjected to the filtering process for smoothing by the $\varepsilon$ filter 107 using a smoothing threshold-value $\varepsilon$ that changes for each of the pixels of the input image, and is outputted from an image output terminal 208 as an output image with reduced noise due to the filtering process.

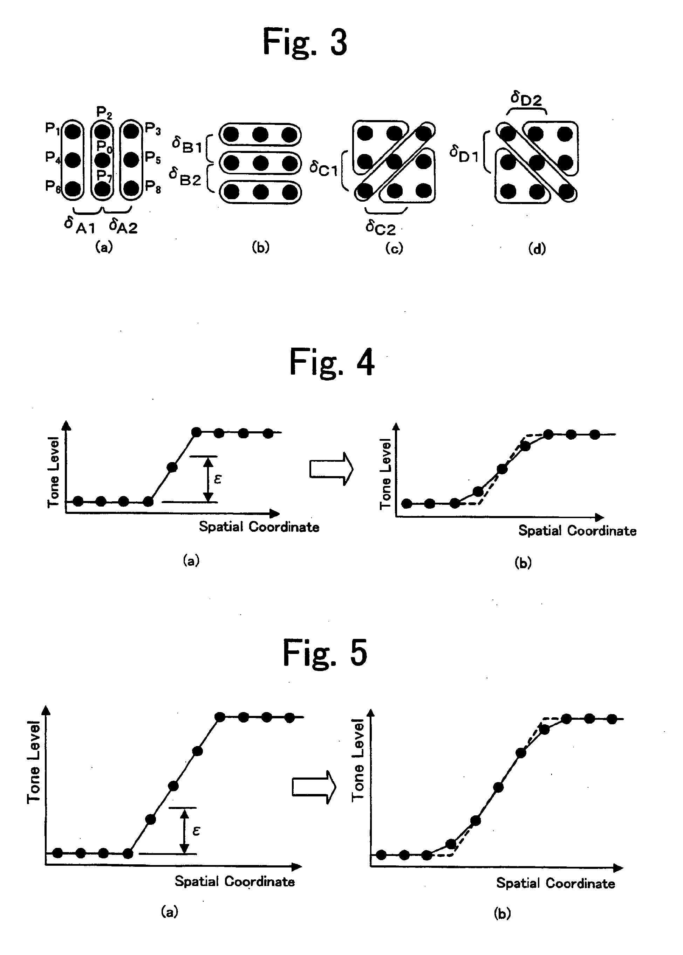

Next, the explanation will be specifically made using Fig. 3 for the direction "A," the direction 'B," the direction "C," and the direction "D" with respect to a given pixel positioned at the center in a pixel block.

Fig. 3 is an illustrative diagram for explaining the direction "A," the direction "B," the direction "C," and the direction "D" with respect to a given pixel positioned at the center in a pixel block of three-by-three pixels. Here, the pixel block of three-by-three pixels is constituted of the nine pixels of $P_0$, $P_1$, $P_2$, $P_3$, $P_4$, $P_5$, $P_6$, $P_7$, and $P_8$ indicated by the filled circles, whereby positioned at the center in the pixel block is the given pixel "$P_0$."

Fig. 3(a) is an illustrative diagram for explaining the direction "A," in which the pixel block is divided into three pixel sets arranged in horizontal direction each including three pixels. Namely, the three pixel sets each result in ($P_1$, $P_4$, $P_6$), ($P_2$, $P_0$, $P_7$) and ($P_3$, $P_5$, $P_8$) as shown in Fig. 3(a), and the direction "A" stands for the horizontal direction.

Next, Fig. 3(b) is an illustrative diagram for explaining the direction "B," in which the pixel block is divided into three pixel sets arranged in vertical direction each including three pixels. Namely, the three pixel sets each result in ($P_1$, $P_2$, $P_3$), ($P_4$, $P_0$, $P_5$) and ($P_6$, $P_7$, $P_8$) as shown in Fig. 3(b), and the direction "B" stands for the vertical direction.

Next, Fig. 3(c) is an illustrative diagram for explaining the direction "C," in which the pixel block is divided into three pixel sets arranged in diagonally right-downward direction each including three pixels. Namely, the three pixel sets each result in ($P_1$, $P_2$, $P_4$), ($P_3$, $P_0$, $P_6$) and ($P_5$, $P_7$, $P_8$) as shown in Fig. 3(c), and the direction "C" stands for the diagonally right-downward direction.

Moreover, Fig. 3(d) is an illustrative diagram for explaining the direction "D," in which the pixel block is divided into three pixel sets arranged in diagonally right-upward direction each including three pixels. Namely, the three pixel sets each result in ($P_4$, $P_6$, $P_7$), ($P_1$, $P_0$, $P_8$) and ($P_2$, $P_3$, $P_5$) as shown in Fig. 3(c), and the direction "D" stands for the diagonally right-upward direction.

Next, the explanation will be made using Fig. 3 for a method to calculate each of the total four directional second-order differential values in the direction "A," direction "B," direction "C," and direction "D."

First, the explanation will be made using Fig. 3(a) for a case in which a second-order differential value in the direction "A" is calculated for the given pixel "$P_0$."

As is shown in Fig. 3(a) that indicates the direction "A," before the second-order differential value in the horizontal direction is calculated, an average of the three pixels is first obtained for each of the three pixel sets ($P_1$, $P_4$, $P_6$), ($P_2$, $P_0$, $P_7$) and ($P_3$, $P_5$, $P_8$), whereby their first-order differential values $\delta_{11}$ and $\delta_{12}$ in the horizontal direction are calculated. Here, when pixel data values that are respective tone levels of the pixels "$P_0$" through "$P_8$" are given by "$z1$" through "$z_9$," the first-order differential values $\delta_{A1}$ in the horizontal direction can be expressed by Equation (4), and the first-order differential values $\delta_{A2}$ in the horizontal direction can be expressed by Equation (5). Note that, because the average is obtained of the three pixels as described above, there exists an effect that the influence by noise components can be suppressed.

$$\delta_{A1} = \frac{(z_1 + z_4 + z_6) - (z_2 + z_0 + z_7)}{3} \quad \cdots \text{Equation(4)}$$

$$\delta_{A2} = \frac{(z_2 + z_0 + z_7) - (z_3 + z_5 + z_8)}{3} \quad \cdots \text{Equation(5)}$$

Next, an absolute second-order differential value $|\Delta_A|$ in the horizontal direction that is the direction "A" can be obtained by Equation (6).

$$\left|\Delta_A\right| = \left|\delta_{A1} - \delta_{A2}\right| \quad \cdots \text{Equation(6)}$$

Respective absolute second-order differential values $|\Delta_B|$, $|\Delta_C|$ and $|\Delta_D|$ in the direction "B," the direction "C" and the direction "D" can be also obtained by a similar calculation method using the pixel sets shown in Figs. 3(b), 3(c) and 3(d), respectively.

The notation system will be rewritten so that the above calculation method for the pixel block including the three-by-three pixels can be commonly expressed. By doing this, an absolute value $|\Delta_u|$ ($u$ = A, B, C, D) for each of the second-order differential values in the four directions can be calculated by first obtaining first-order differential values $\delta_{u1}$ and $\delta_{u2}$ from the following Equation (7) and Equation (8), followed by substituting the first-order differential values $\delta_{u1}$ and $\delta_{u2}$ into Equation (9). Here a direction approximately perpendicular to the direction u is represented by $v$($v$ = 0, 1, 2); the number $w$($w$= 0, 1, 2) is individually affixed to pixel sets each including three pixels approximately arrayed in the direction $v$, and a pixel data value of each of pixels constituting the pixel block is expressed as $z_{wv}$. Moreover, expressed as $b_v$ is a weighting factor of the direction $v$ given to the respective three pixels approximately arrayed in the direction $v$ when weighted averaging is performed on the three pixels in each of the pixel sets.

$$\delta_{u1} = \frac{\partial Z_1}{\partial u} = \frac{\sum_{v=0}^{2} b_v \cdot z_{0v} - \sum_{v=0}^{2} b_v \cdot z_{1v}}{\sum_{v=0}^{2} b_v} \quad \cdots \text{Equation(7)}$$

$$\delta_{u2} = \frac{\partial Z_2}{\partial u} = \frac{\sum_{v=0}^{2} b_v \cdot z_{1v} - \sum_{v=0}^{2} b_v \cdot z_{2v}}{\sum_{v=0}^{2} b_v} \quad \cdots \text{Equation(8)}$$

$$\left| \Delta_u \right| = \left| \frac{\partial^2 Z}{\partial u^2} \right| = \left| \frac{\partial Z_1}{\partial u} - \frac{\partial Z_2}{\partial u} \right| = \left| \delta_{u1} - \delta_{u2} \right| \quad \cdots \text{Equation(9)}$$

The explanation of correspondence relationships between Equation (7) and Equation (8) described above will be specifically made for a case of Fig. 3(a) as an example. The direction is set as u = A, and there are three pixel sets: a pixel set "0" is ($P_1$, $P_4$, $P_6$), where $w$ = 0; a pixel set "1" is ($P_2$, $P_0$, $P_7$), where w= 1; and a pixel set "2" is ($P_3$, $P_5$, $P_8$), where w = 2. Here, in Equation (7) and Equation (8), when averaging is made for each of the pixel sets, a weighting factor is given to the respective three pixels, whereby the influence by noise components is further suppressed. Note that, if it is set $b_v$ = 1 (v = 0, 1, 2), without taking the weighted averaging, Equation (7) corresponds to Equation (4), and Equation (8) corresponds to Equation (5). For example, pixel data values $z_{0v}$ (v = 0, 1, 2) of three pixels constituting the pixel set "0" are the pixel data values $z_1$, $z_4$ and $z_6$ of the pixels $P_1$, $P_4$ and $P_6$. In addition, pixel data values $z_{1v}$ (v = 0, 1, 2) of three pixels constituting the pixel set "1" are the pixel data values $z_2$, $z_0$ and $z_7$ of the pixels $P_2$, $P_0$ and $P_7$. Moreover, pixel data values $z_{2v}$ (v= 0, 1, 2) of three pixels constituting the pixel set "2" are the pixel data values $z_3$, $z_5$ and $z_8$ of the pixels $P_3$, $P_5$ and $P_8$.

Like the manner described above, Equation (7) and Equation (8) can also express for the direction "B," the direction "C" and the direction "D," so that absolute values of the second-order differential values in the four directions can be calculated by Equation (9).

Next, the explanation will be made for a method to calculate a multi-directional second-order differential value $\Delta_d$ in the multi-directional second-order differential value calculation means 105 based on the inputted absolute value "$\Delta_u$| l (u = A, B, C, D) of the second-order differential values in the four directions.

First, among the absolute values $|\Delta_u|$ of the second-order differential values in the four directions, a value $|\Delta_{max}|$ being the maximum and a value $|\Delta_{min}|$ being the minimum are determined. Note that, here, the minimum value is selected as $|\Delta_{min}|$ from among the absolute values of the second-order differential values in the four directions; however, an absolute value of second-order differential value in the direction perpendicular to the direction of the maximum value $|\Delta_{max}|$ may instead be used. Next, as expressed in Equation (10), the difference between the maximum value $|\Delta_{max}|$ and the minimum value $|\Delta_{min}|$ of the absolute values of the second-order differential values is taken, so that the multi-directional second-order differential value calculation means 105 outputs a value of the difference into the smoothing threshold-value $\varepsilon$ setting means 106 as a multi-directional second-order differential value $\Delta_d$.

$$\Delta_d = \max\left(|\Delta_A|, |\Delta_B|, |\Delta_C|, |\Delta_D|\right) - \min\left(|\Delta_A|, |\Delta_B|, |\Delta_C|, |\Delta_D|\right) \cdots \text{Equation(10)}$$

Next, in the smoothing threshold-value $\varepsilon$ setting means 106, a smoothing threshold-value $\varepsilon$ is determined based on the multi-directional second-order differential value da. Specifically, when the multa-directional second-order differential value $\Delta_d$ is larger than a first setting threshold-value $Td1$, the smoothing threshold-value $\varepsilon$ is made smaller. For example, it is set $\varepsilon = \varepsilon1$. In addition, when the multi-directional second-order differential value $\Delta_d$ is smaller than a second setting threshold-value $T_{d2}$, the smoothing threshold-value $\varepsilon$ is made larger. For example, it is set $\varepsilon = \varepsilon_2$. But, it is ensured $\varepsilon_1 \le \varepsilon_2$. A value of the smoothing threshold-value $\varepsilon$ determined according to the manner described above is outputted form the smoothing threshold-value $\varepsilon$ setting means 106 into the $\varepsilon$ filter 107.

Next, in the $\varepsilon$ filter 107, the filtering process for smoothing is performed on pixel blocks of the input image inputted into the input terminal 100 using the smoothing threshold-value $\varepsilon$ having been outputted from the smoothing threshold-value $\varepsilon$ setting means 106.

Hereinbefore, the explanation has been made for the operations of the respective means that constitute the noise reduction device in Embodiment 1 according to the present invention. Hereinafter, the explanation will be made for what kind of output image is to be outputted from the output terminal 108 when an input image is inputted into the input terminal 100 and is subjected to the noise reduction process using the noise reduction device in Embodiment 1. In this regard, the explanation will be made in comparison with a noise reduction device of a first-order differential value type using a conventional $\varepsilon$ filter that is configured to perform first-order differentiation or first difference calculation with respect to luminance of pixels in each pixel block including a plurality of pixels in an input image, and to perform a determination of an edge area based on absolute values of first-order differential values or first differences.

Fig. 4 is an illustrative diagram for explaining what kind of output image will be resulted from an input image inputted into the above first-order differential value noise reduction device, by way of a change in waveform of pixel data values regarding tone levels near an edge. Fig. 4(a) is a diagram showing the tone levels for a spatial coordinate near the edge in the input image, and the pixel data values are indicated by filled circles. Fig. 4(a) is an example when a gray-scale change of the input image at its edge is small, and the difference between a smoothing threshold-value $\varepsilon$ and the gray-scale change is small. In addition, Fig. 4(b) shows an output image outputted from the first-order differential value noise reduction device into which the input image shown in Fig. 4(a) is inputted. The solid line indicates a waveform to which the noise reduction process has been applied, and the broken line drawn for easier comparison indicates the waveform of the input image in Fig. 4(a). As is clear from Fig. 4(b), the waveform of the input image is blunted near the edge. In particular, the waveform bluntness predominantly occurs in the vicinity of the rising-edge start-point and in the vicinity of the rising-edge end-point.

Fig. 5 is an illustrative diagram for explaining, similarly to Fig. 4, what kind of output image will be resulted from an input image inputted into the above first-order differential value noise reduction device, by way of a change in waveform of pixel data values regarding tone levels near an edge. Fig. 5(a) is a diagram showing the tone levels for a spatial coordinate near the edge in the input image, and the pixel data values are indicated by filled circles. Fig. 5(a) is an example when a gray-scale change of the input image at its edge is large and the difference between a smoothing threshold-value $\varepsilon$ and the gray-scale change is large. In addition, Fig. 5(b) shows an output image outputted from the first-order differential value noise reduction device into which the input image shown in Fig. 5(a) is inputted. The solid line indicates a waveform to which the noise reduction process has been applied, and the broken line drawn for easier comparison indicates the waveform of the input image in Fig. 5(a). As is clear from Fig. 5(b), because the gray-scale change of the input image at its edge is large, and the difference between the smoothing threshold-value s and the gray-scale change is large, a waveform bluntness shows little sign in the area between the rising-edge start-point and the rising-edge end-point. Nevertheless, the waveform bluntness clearly occurs in the vicinity of the rising-edge start-point and in the vicinity of the rising-edge end-point.

As described above, in the case of the first-order differential value noise reduction device using the conventional $\varepsilon$ filter, where is subjected to noise reduction process using the $\varepsilon$ filter for edge area is the entirety of edge area including both of the vicinity of the rising-edge start-point and the vicinity of the rising-edge end-point. Therefore, it is not possible to avoid a problem in which the waveform bluntness significantly occurs in the vicinity of the rising-edge start-point and in the vicinity of the rising-edge end-point.

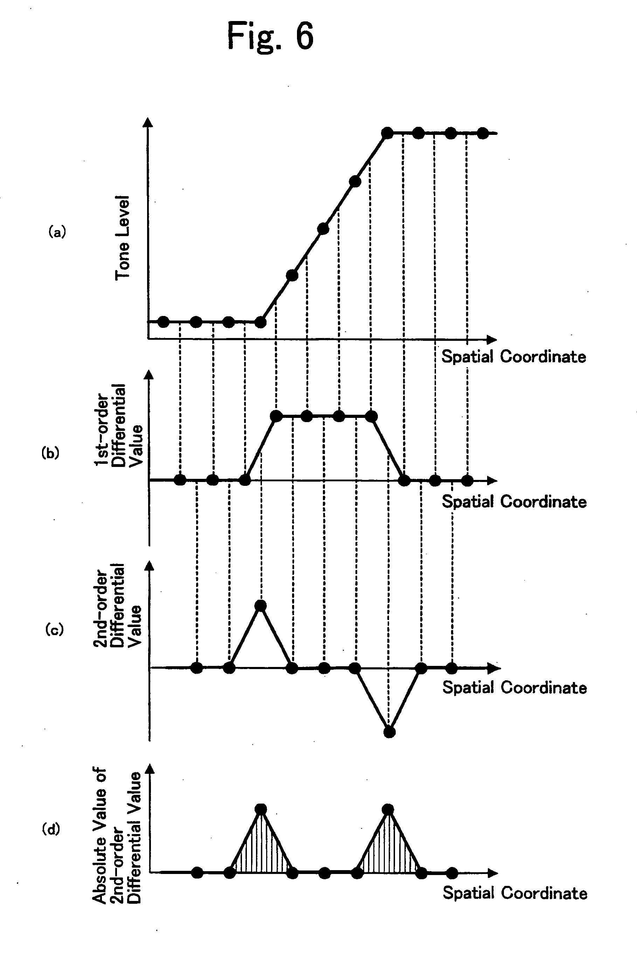

In the noise reduction device in Embodiment 1 according to the present invention, a smoothing threshold-value ε for a given pixel corresponding to a pixel block is determined based on absolute values of the second-order differential values in the four directions; hereinafter, the explanation will be made using Fig. 6 for the difference between a case based on first-order differential values and another case based on second-order differential values.

Fig. 6 is an illustrative diagram for explaining how the waveform near an edge changes until absolute values of second-order differential values are calculated, in either one of the direction-A second-order differential value calculation means 101, the direction-B second-order differential value calculation means 102, the direction-C second-order differential value calculation means 103, and the direction-D second-order differential value calculation means 104 shown in Fig. 1. Fig. 6(a) shows a waveform of tone levels of the input image, and Fig. 6(b) shows a waveform of first-order differential values. In addition, Fig. 6(c) shows a waveform of second-order differential values, and Fig. 6(d) shows a waveform of absolute values of the second-order differential values.

In a case of the first-order differential value noise reduction device using the conventional ε filter, because a smoothing threshold-value ε is determined based on the first-order differential values shown in Fig. 6(b), the smoothing threshold-value ε is uniformly applied to the entirety of edge area from the vicinity of the rising-edge start-point, including the flat middle area, until the vicinity of the rising-edge end-point.

On the contrary, in the noise reduction device in Embodiment 1, a smoothing threshold-value ε is determined based on absolute values of second-order differential values shown in Fig. 6(d). As is clear from Figs. 6(a) and 6(d), the absolute values of second-order differential values result in large values in the vicinity of the rising start-point and in the vicinity of the rising end-point of the edge in the input image, and become small not only in the areas other than the vicinities of the edge, but also in the area between the rising-edge start-point and the rising-edge end-point. Therefore, a smoothing threshold-value ε is determined based on the absolute values of second-order differential values; specifically, a smoothing threshold-value ε is determined to be smaller than a predetermined value when an absolute value of second-order differential value is larger than the first setting threshold-value $T_{d1}$, or the smoothing threshold-value ε is determined to be larger than a predetermined value when the absolute value of second-order differential value is smaller than the second setting threshold-value $T_{d2}$. According to the manner described above, with a sufficient noise reduction effect that is realized in the areas other than the vicinity of the rising-edge start-point and the vicinity of the rising-edge end-point shown in Fig. 4 and Fig. 5, it is possible to curb the waveform bluntness that significantly occurs in the vicinity of the rising-edge start-point and in the vicinity of the rising-edge end-point.

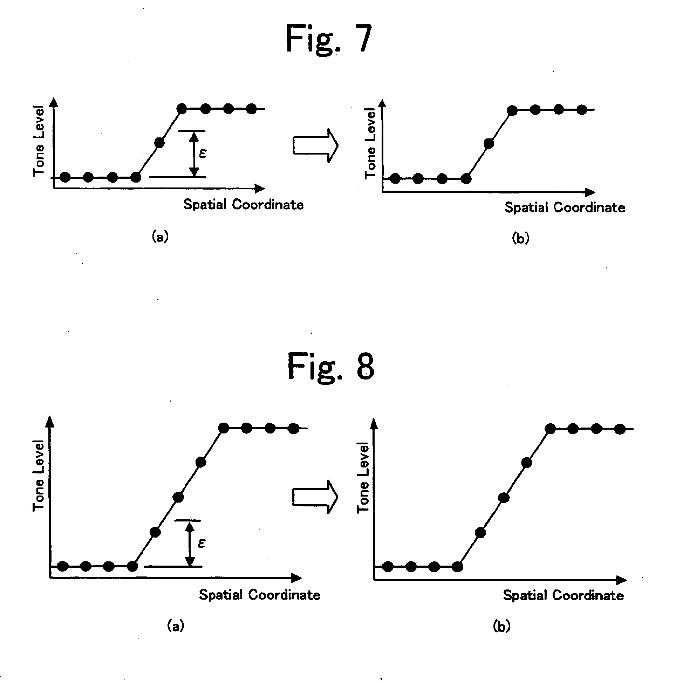

Fig. 7 is an illustrative diagram for explaining what kind of output image will be resulted from an input image inputted into this noise reduction device in Embodiment 1, by way of a change in waveform of pixel data values regarding tone levels near an edge. Fig. 7(a) is a diagram showing the tone levels for a spatial coordinate near the edge in the input image, and the pixel data values are indicated by filled circles. Fig. 7(a) is an example when a gray-scale change of the input image at its edge is small, and the difference between a smoothing threshold-value ε and the gray-scale change is small. In addition, Fig 7(b) shows an output image outputted from the noise reduction device of Embodiment 1 into which the input image shown in Fig. 7(a) is inputted. The solid line indicates a waveform to which the noise reduction process has been applied although a broken line to show the waveform of the input image in Fig. 7(a) is drawn therewith for easier comparison, it overlaps the solid line so that there is no apparent difference therebetween. As is clear from Fig. 7(b) by comparing with Fig. 4(b) for the case of the first-order differential value noise reduction device using the conventional ε filter, the waveform bluntness in the vicinity of the rising-edge start-point and that in the vicinity of the rising-edge end-point are curbed in the noise reduction device in Embodiment 1.

Fig. 8 is an illustrative diagram for explaining, similarly to Fig. 7, what kind of output image will be resulted from an input image inputted into this noise reduction device in Embodiment 1, by way of a change in waveform of pixel data values regarding tone levels near an edge. Fig. 8(a) is a diagram showing the tone levels for a spatial coordinate near the edge in the input image, and the pixel data values are indicated by filled circles. Fig. 8(a) is an example when a gray-scale change of the input image at its edge is large, and the difference between a smoothing threshold-value ε and the gray-scale change is large. In addition, Fig. 8(b) shows an output image outputted from the noise reduction device of Embodiment 1 into which the input image shown in Fig. 8(a) is inputted. The solid line indicates a waveform to which the noise reduction process has been applied; although a broken line to show the waveform of the input image in Fig. 5(a) is drawn therewith for easier comparison, it overlaps the solid line similarly to Fig. 7(b) so that there is no apparent difference therebetween. As is clear from Fig. 8(b) by comparing with Fig. 5(b) for the case of the first-order differential value noise reduction device using the conventional ε filter, the waveform bluntness in the vicinity of the rising-edge start-point and that in the vicinity of the rising-edge end-point are curbed in the noise reduction device in Embodiment 1.

As described above, according to the noise reduction device in Embodiment 1 of the present invention, a pixel block centering on a given pixel in an input image is extracted; respective second-order differential values of pixel data values for the pixels constituting the pixel block are obtained with respect to a plurality of directions each intersecting at and centering on the given pixel; the vicinity of a rising start-point and the vicinity of a rising end-point of an edge in the input image are detected; and a smoothing threshold-value ε corresponding to the pixel block is determined based on the respective second-order differential values obtained for the respective plurality of directions, so that it is possible to curb edge blurring occurring in the vicinity of the rising start-point of the detected edge and in the vicinity of the rising end-point thereof. Therefore, there exist significant effects that the edge blurring in luminance profile shape is curbed and at the same time image noise can be reduced.

Note that, hereinbefore, the explanation has been made only for a case in which the directions for calculating the second-order differential values are four directions; however, it is needless to say that the directions may be decreased less than four of those when edge directions in the input image are uneven and concentrated to a specific direction so that it would be appropriate to proceed a noise reduction process by giving attention only to those edges in that direction. In addition, it is needless to say that, by increasing the directions for calculating the second-order differential values to more than the four directions, it is possible to flexibly deal also with an edge in another direction, so that noise reduction can be achieved with further curbing the edge blurring.

Note that, hereinbefore, the explanation has been made for a case in which the pixel block includes the three-by-three pixels; however, it is needless to say that the pixel block of the three-by-three pixels is not a limited one, and also that similar effects can be obtained by using a pixel block including more pixels than those of three-by-three.


Embodiment 2.


In the noise reduction device in Embodiment 1 according to the present invention, the explanation has been made for a case in which the input image is in a single frame. On the other hand, when an input image is in a plurality of frames, by performing smoothing, using a smoothing threshold-value ε determined for an input image corresponding to a first frame among a plurality of frames, on the input image corresponding to the first frame, and also by performing smoothing, using the smoothing threshold-value ε, on an input image corresponding to a second frame different from the first frame among the plurality of frames, such effects are resulted that edge blurring can be curbed, and at the same time, noise reduction performance is enhanced.

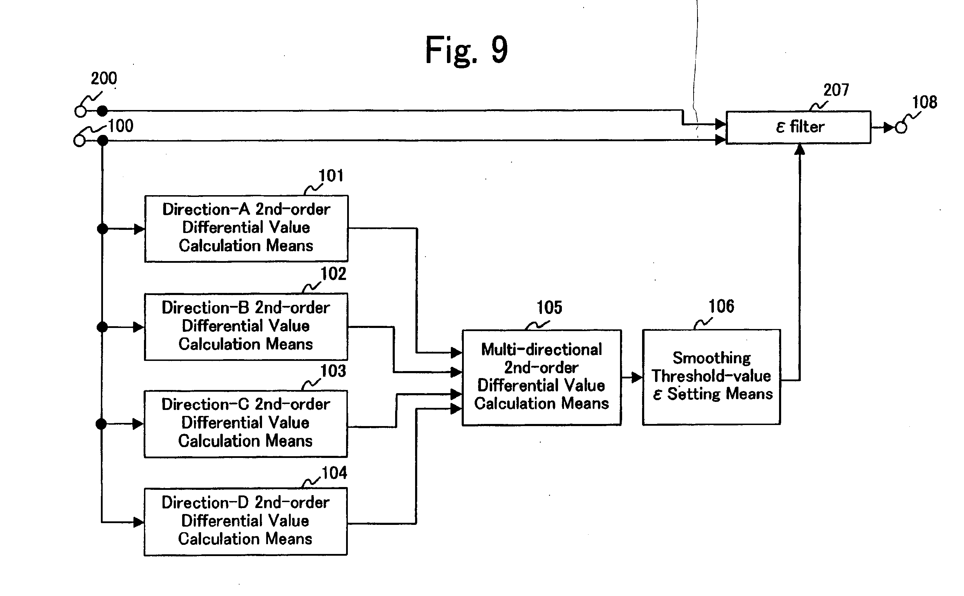

Fig. 9 is a structure diagram showing a configuration of a noise reduction device in Embodiment 2 according to the present invention. There are differences from the configuration shown in Fig. 2 of Embodiment 1 that an input image is in a plurality of frames, and an input terminal 200 is added in addition to the input terminal 100. Moreover, there are differences that an ε filter 207 performs smoothing, using a smoothing threshold-value ε calculated based on the input image corresponding to a first frame inputted into the input terminal 100, on the input image corresponding to the first frame inputted into the input terminal 100, and also performs smoothing, using the same smoothing threshold-value ε, on the input image corresponding to a second frame inputted into the input terminal 200. The ε filter 207 is so configured to perform three-dimensional processes including a time-directional one as well, so as to realize smoothing process on the plurality of frames. Other items and things than these are similar to those in Embodiment 1. Note that, the same reference numerals and symbols designate the same items as, or the items corresponding to, those shown in Fig. 2; thus, their explanation is omitted.

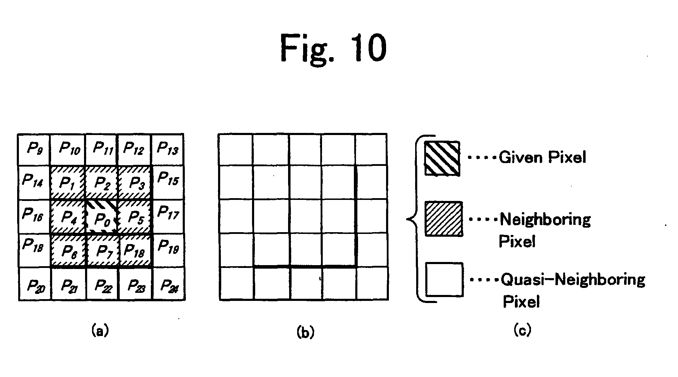

Fig. 10 is a diagram showing pixel positions neighboring a given pixel in a case of Embodiment 2. Fig. 10(a) shows a given frame including the given pixel for determining a smoothing threshold-value ε, and Fig. 10(b) shows a just one previous frame before the given frame. In addition, Fig. 10(c) is a diagram for explaining types of the pixels in the frames of Figs. 10(a) and 10(b).

In the given frame shown in Fig. 10(a), the given pixel is designated by "$P_0$"; neighboring pixels adjacent to the given pixel "$P_0$" are designated by "$P_1$" through "$P_8$"; and quasi-neighboring pixels accordingly adjacent to the neighboring pixels, by "$P_9$" through "$P_{24}$." In addition, all of twenty-five pixels in the just one previous frame as in Fig. 10(b) are regarded as quasi-neighboring pixels.

When the given pixel "$P_0$" is subjected to processing, a multi-directional second-order differential value $\Delta_d$ is obtained using the neighboring pixels "$P_1$" through "$P_8$" i n the given frame including the given pixel, in a similar manner to the case in Embodiment 1. Moreover, the smoothing threshold-value ε determined from the multi-directional second-order differential value $\Delta_d$ is applied, as a smoothing threshold-value ε of the ε filter 207 that performs three-dimensional processes, not only to the pixels in the given frame, but also to those in another frame, for example, a just one previous frame or the like. Here, the another frame may be either a just one previous input image or a just one previous output image. In addition, pixel positions to be referred in the another frame may be the same as the positions centering on the given pixel "$P_0$" i n the given frame, or may also be, after a motion detection processing, the same positions where the same contents are displayed correspondingly in the image.

In general, a higher degree of noise reduction effect can be obtained by a noise reduction processing using a plurality of frames than by the noise reduction processing using only a single frame. In this Embodiment 2, because tone levels that allow smoothing process are similarly limited by the smoothing threshold-value ε, it also becomes possible to curb blurring phenomena of a moving object that is being expressed by use of a plurality of frames. Moreover, the smoothing threshold-value ε for the vicinity of the rising-edge start-point and that for the vicinity of the rising-edge end-point are determined to be smaller, which results in a further effect that edge information becomes easily preservable.

**Claims**

1.  A noise reduction device, comprising:

    an extraction means for extracting a pixel block in an input image, the pixel block including a given pixel and a plurality of pixels neighboring and centering on the given pixel;
    a second-order differential value calculation means (101-104, 105) for obtaining respective second-order differential values of pixel data values for the pixels constituting the pixel block, with respect to a plurality of directions each intersecting at and centering on the given pixel;
    a threshold-value setting means (106) for determining a smoothing threshold-value ($\varepsilon$) corresponding to the pixel block, based on the respective second-order differential values; and
    a smoothing means (107) for performing smoothing, among the pixels constituting the pixel block, on a pixel having a pixel data value at which its difference to a pixel data value of the given pixel becomes, in absolute value, equal to or smaller than the smoothing threshold-value ($\varepsilon$).

2.  The noise reduction device as set forth in claim 1, wherein the threshold-value setting means (106) determines the smoothing threshold-value ($\varepsilon$), based on the difference between a maximum and a minimum absolute values of the second-order differential values among absolute values of the respective second-order differential values corresponding to the respective plurality of directions.

3.  The noise reduction device as set forth in claim 2, wherein the plurality of directions each intersecting at and centering on the given pixel are four directions with respect to the pixel block including a vertical direction, a horizontal direction, a diagonally right-downward direction and a diagonally right-upward direction.

4.  The noise reduction device as set forth in claim 2, wherein
    the pixel block includes three-by-three pixels centering on the given pixel,
    and the second-order differential value calculation means (101-104, 105) obtains an absolute value $|\Delta_u|$ from each of the second-order differential values by the following three equations,

$$\delta_{u1} = \frac{\partial Z_1}{\partial u} = \frac{\sum_{v=0}^{2} b_v \cdot z_{0v} - \sum_{v=0}^{2} b_v \cdot z_{1v}}{\sum_{v=0}^{2} b_v}$$

$$\delta_{u2} = \frac{\partial Z_2}{\partial u} = \frac{\sum_{v=0}^{2} b_v \cdot z_{1v} - \sum_{v=0}^{2} b_v \cdot z_{2v}}{\sum_{v=0}^{2} b_v}$$

$$\left| \Delta_u \right| = \left| \frac{\partial^2 Z}{\partial u^2} \right| = \left| \frac{\partial Z_1}{\partial u} - \frac{\partial Z_2}{\partial u} \right| = \left| \delta_{u1} - \delta_{u2} \right|$$

.

where the plurality of directions each for obtaining the respective second-order differential values is represented by $u$ ($u$ = A, B, C, D),
a direction approximately perpendicular to the direction u is represented by $v$ ($v$= 0, 1, 2),
the number $w$ ($w$ = 0, 1, 2) is individually affixed to a pixel set including three pixels approximately arrayed in the direction $v$,
each of the pixel data values for the pixels constituting the pixel block is expressed as $z_{wv}$, and
a weighting factor in the direction $v$ is expressed as $b_v$.

5.  The noise reduction device as set forth in claim 2, wherein when the difference between a maximum and a minimum absolute values of the second-order differential values is larger than a first setting threshold-value ($T_{d1}$), the smoothing threshold-value (e) is set smaller than a predetermined value.

6.  The noise reduction device as set forth in claim 2, wherein when the difference between a maximum and a minimum absolute values of the second-order differential values is smaller than a second setting threshold-value ($T_{d2}$), the smoothing threshold-value ($\varepsilon$) is set larger than a predetermined value.

7.  A noise reduction device, comprising:

    an extraction means for extracting a first pixel block in an input image, the pixel block including a given pixel and a plurality of pixels neighboring and centering on the given pixel corresponding to a first frame among a plurality of frames;
    a second-order differential value calculation means (101-104, 105) for obtaining respective second-order differential values of pixel data values for the pixels constituting the first pixel block, with respect to a plurality of directions each intersecting at and centering on the given pixel
    a threshold-value setting means (106) for determining a smoothing threshold-value ($\varepsilon$), based on the respective second-order differential values; and
    a smoothing means (207) for performing smoothing, among the pixels constituting the first pixel block, on a pixel having a pixel data value at which its difference to a pixel data value of the given pixel becomes, in absolute value, equal to or smaller than the smoothing threshold-value ($\varepsilon$), and also for performing smoothing, among pixels constituting a second pixel block in a second frame different from the first frame among the plurality of frames, on a pixel having a pixel data value at which its difference to the pixel data value of the given pixel becomes, in absolute value, equal to or smaller than the smoothing threshold-value ($\varepsilon$).

# Fig. 1

(a)          (b)          (c)

# Fig. 2

Diagram showing signal flow: input 100 branches to four blocks (101 Direction-A 2nd-order Differential Value Calculation Means, 102 Direction-B 2nd-order Differential Value Calculation Means, 103 Direction-C 2nd-order Differential Value Calculation Means, 104 Direction-D 2nd-order Differential Value Calculation Means) whose outputs feed 105 Multi-directional 2nd-order Differential Value Calculation Means, then 106 Smoothing Threshold-value ε Setting Means, connecting to 107 ε filter with output 108.

EP 2 190 183 A1

# Fig. 3

$P_1$ $P_2$ $P_3$
$P_4$ $P_0$ $P_5$
$P_6$ $P_7$ $P_8$

$\delta_{A1}$ $\delta_{A2}$

(a)

$\delta_{B1}$
$\delta_{B2}$

(b)

$\delta_{C1}$
$\delta_{C2}$

(c)

$\delta_{D2}$
$\delta_{D1}$

(d)

# Fig. 4

Tone Level

Spatial Coordinate

$\varepsilon$

(a)

Tone Level

Spatial Coordinate

(b)

# Fig. 5

Tone Level

Spatial Coordinate

$\varepsilon$

(a)

Tone Level

Spatial Coordinate

(b)

# Fig. 6

(a)

Tone Level

Spatial Coordinate

(b)

1st-order Differential Value

Spatial Coordinate

(c)

2nd-order Differential Value

Spatial Coordinate

(d)

Absolute Value of 2nd-order Differential Value

Spatial Coordinate

# Fig. 7

(a)                    (b)

# Fig. 8

(a)                    (b)

# Fig. 9

EP 2 190 183 A1

# Fig. 10

| | | | | |
|---|---|---|---|---|
| $P_9$ | $P_{10}$ | $P_{11}$ | $P_{12}$ | $P_{13}$ |
| $P_{14}$ | $P_1$ | $P_2$ | $P_3$ | $P_{15}$ |
| $P_{16}$ | $P_4$ | $P_0$ | $P_5$ | $P_{17}$ |
| $P_{18}$ | $P_6$ | $P_7$ | $P_{18}$ | $P_{19}$ |
| $P_{20}$ | $P_{21}$ | $P_{22}$ | $P_{23}$ | $P_{24}$ |

(a)

(b)

···· Given Pixel

···· Neighboring Pixel

···· Quasi-Neighboring Pixel

(c)

**INTERNATIONAL SEARCH REPORT**

| International application No. |
|---|
| PCT/JP2008/052945 |

A. CLASSIFICATION OF SUBJECT MATTER
*H04N5/21(2006.01)i*

According to International Patent Classification (IPC) or to both national classification and IPC

B. FIELDS SEARCHED

Minimum documentation searched (classification system followed by classification symbols)
H04N5/21

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2001-298621 A  (Sony Corp.),<br>26 October, 2001 (26.10.01),<br>Par. Nos. [0007] to [0019]<br>& US 2001/0038716 A1    & EP 1137267 A2 | 1,7<br>2-6 |
| Y<br>A | JP 2004-336651 A  (Sony Corp.),<br>25 November, 2004 (25.11.04),<br>Par. Nos. [0024], [0083] to [0095]; Fig. 12<br>(Family: none) | 1,7<br>2-6 |
| Y<br>A | JP 2005-311455 A  (Sony Corp.),<br>04 November, 2005 (04.11.05),<br>Par. Nos. [0024] to [0058]; Figs. 3 to 7<br>(Family: none) | 1,7<br>2-6 |

☒ Further documents are listed in the continuation of Box C.       ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    19 March, 2008 (19.03.08) | Date of mailing of the international search report<br>    01 April, 2008 (01.04.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/052945

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-152669 A  (Minolta Co., Ltd.),<br>24 May, 2002 (24.05.02),<br>Par. Nos. [0044] to [0059]<br>& US 2002/0085740 A1 | 7 |
| A | JP 2005-117449 A  (Victor Company Of Japan, Ltd.),<br>28 April, 2005 (28.04.05),<br>Full text; all drawings<br>(Family: none) | 1 |

Form PCT/ISA/210 (continuation of second sheet) (April 2007)

## REFERENCES CITED IN THE DESCRIPTION

**Patent documents cited in the description**

- JP 2001188272 A
- JP 2004282442 A